# EUROPEAN PATENT SPECIFICATION

(11) **EP 3 896 416 B1**
(45) Date of publication and mention of the grant of the patent: **13.08.2025**
(21) Application number: 20315179.0
(22) Date of filing: 16.04.2020
(51) Int. Cl.: G01L 1/22, G01L 3/14, G01L 5/162, B25J 13/08, G01L 5/22

(54) **TORQUE SENSOR DEVICE**
DREHMOMENTMESSVORRICHTUNG
CAPTEUR DE COUPLE

(43) Date of publication of application: 20.10.2021
(73) Proprietor: TE Connectivity Sensors France, 31027 Toulouse Cedex 3 (FR)
(72) Inventor: Vignolles, Arthur, 78126 Aulnay Sur Mauldre (FR); Leclair, Jean-Pierre, 78640 St Germain-De-La-Grange (FR)
(74) Representative: Grünecker Patent- und Rechtsanwälte PartG mbB

(56) References cited:
- EP-A1- 2 322 905
- DE-U1- 202016 008 595
- US-A1- 2012 144 933

## Description

### Field of the Invention

The invention relates to a torque sensor device configured for determining a torque of some object, for example, a driven shaft or a robot joint.

### Background of the Invention

Accurately detecting the torque of an object, as some driven shaft or joint, represents a problem that is of relevance in a plurality of applications. A particular application relates to the torque measurement during the movement of joints of robots. In a joint of a robot on which loads in various directions act, in order to accurately detect a torque in the rotation direction acting on the joint, usually some cancellation mechanism have to be provided in order to exclude loads in directions other than the rotation direction from the measurement process. However, reliable exclusion of such loads is very difficult.

In the art it is known to compensate for loads in directions other than the rotation direction by means of Wheatstone circuitries and torques sensors comprising radially elastic torque transfer portions (see, for example, WO 2018/041948 A1).

DE 20 2016 008595 U1 discloses a torque sensor device comprising an inner flange and an outer flange and an intermediate portion between the inner and outer flanges, wherein the intermediate portion comprises thinned receptacles for accommodating strain gages. Pairs of strain gages are arranged symmetrically to measurement channels to reduce the effects of tilt moments.

US 2012/144933 discloses a torque sensor, which consists of two disc-shaped fastening flanges that lie parallel opposite one another, and that are connected with one another by a radially inner moment or torque transmission element. One fastening flange is embodied as a measuring flange, which comprises several recesses on a coaxial encircling area between its outer fastening ring surface and the torque transmission element, and shear force transducers are applied on the outer or base surfaces of the recesses. The recesses are formed by at least three measuring pockets, which are separated from one another by at least three radial stiffening webs. The measuring flange, on its radially inwardly lying area relative to the radially outer fastening ring surface is embodied as an encircling closed or continuous surface, on which the measuring electronics is fastened, which is hermetically closed with a cover.

EP 2 322 905 A1 discloses a sensor for measuring axial or radial forces comprising a rotationally symmetric body comprising an inner force introducing portion and an outer force outputting portion separated from each other by a deforming portion. Transducers are formed over the deforming portion and arranged in tapered out portions formed in the inner force introducing portion and an outer force outputting portion.

However, known torque sensor devices still suffer from a lack of accuracy of the torque measurements and relatively bulky configurations that, moreover, require additional members connected to the sensor bodies when it comes to sealing purposes of gear boxes by means of the sensor devices.

Consequently, there is a need for a torque sensor device that allows for accurate torque measurements and that can be formed in a compact light-weighted configuration.

### Description of the Invention

In order to address the above-mentioned need the invention provides a torque sensor device, as defined in claim 1, the
torque sensor device comprising a circular body comprising an annular inner flange and an annular outer flange and a circular intermediate portion located between the annular inner flange and the annular outer flange, wherein the annular inner flange is completely located closer to the center of the circular body than the annular outer flange and comprises inner force application openings formed therein exclusively closer to the center of the circular body than the circular intermediate portion, the annular outer flange comprises outer force application openings formed therein, and the circular intermediate portion comprises an inner sub-portion, an outer sub-portion and a circumferential groove for suppressing effects of radial loads and separating the inner sub-portion and the outer sub-portion from each other; and
a plurality of measurement transducers formed in and/or on the inner sub-portion of the circular intermediate portion, in particular, in a pairwise manner.

The circular intermediate portion is a continuously solid portion (comprising no openings/cutouts) that at least partially may have a smaller thickness in an axial direction as the inner and/or outer flange. In principle, the circular body may be a monolithic body or may comprise parts attached to each other.

This compact configuration with an intermediate portion extending continuously from the inner flange to the outer flange in a radial direction allows for using the torque sensor device for sealing, for example, of a gear box without the need for an additional sealing means, like a sealing membrane, as it is necessary in the art. For example, the torque sensor device is suitable for sealing a gear box of a robot joint.

Torque to be measured is transferred, for example, by a rotating shaft under consideration and some static member, via connection members connected to the inner and outer force application openings. Thereby, the torque applied between the inner and outer flanges can be measured.

The measurement transducers may comprise or consist of at least one of silicon gages, foil strain gages, and thin layer strain gages. Particularly, the pairs of measurement transducers may be arranged symmetrically about an axial direction (axis extending through the center of the circular body in a direction perpendicular to the main surface of the circular body) of the torque sensor device. The strain gages may sense shear strain, particularly, oriented 45° inclined to the radial axis running through the center of the circular body in a direction parallel to the main surface of the circular body to which the strain gages of a pair of strain gages are symmetrically arranged. Pairs of measurement transducers that are located opposite to each other define a measurement channel. The arrangement allows for eliminating or largely reducing the effects of tilts and radial and axial loads on the measurement of the torque and, thus, allows for an increased accuracy of the measurement results obtained by means of the torque sensor device of the invention (see also detailed description below).

According to a particular embodiment, the plurality of measurement transducers comprises at least four pairs of measurement transducers wherein the two measurement transducers of each of the pairs of measurement transducers are located symmetrically to an axis extending through the center of the circular body in a direction parallel to the main surface of the circular body (radial axis). Such an arrangement may be advantageous with respect to the measurement accuracy by reliably suppressing influences of radial and axial loads as well as tilts.

Four pairs of measurement transducers (for example, exactly four pairs of measurement transducers) may be provided wherein for each of the four pairs of measurement transducers it holds that an axis extending through the center of the circular body in a direction parallel to the main surface of the circular body to which the two measurement transducers of that pair of measurement transducers are located symmetrically is spaced apart by 90° in a circumferential direction from an axis extending through the center of the circular body in a direction parallel to the main surface of the circular body to which two measurement transducers of a neighboring pair of measurement transducers are located symmetrically. The measurement accuracy may be enhanced by this arrangement due to reliably suppressing influences of radial and axial loads as well as tilts.

With respect to reducing the effects of radial loads on the measurement of the torque of an object under consideration it might be advantageous to form in the circular intermediate portion tapered/thinned out portions not extending completely through the thickness direction of the intermediate portion, i.e., in a direction along an axis extending through the center of the circular body in a direction perpendicular to the main surface of the circular body. The tapered/thinned out portions are, for example, located closer the outer flange than the inner flange and may have longer extensions in a circular direction than in a radial direction.

In particular, the center of each of the tapered out portions in a circumferential direction may be spaced apart from an axis extending through the center of the circular body in a direction parallel to the main surface of the circular body with respect to which two measurement transducers of a pair of measurement transducers are located symmetrically (this axis defining a measurement channel) by 22.5° in a circumferential direction.

The measurement of a torque by means of the inventive torque sensor device may be based on strain gages representing the measurement transducers. The strain gages may be connected to a Wheatstone bridge circuitry that becomes unbalanced when a torque is applied and outputs a voltage (caused by the resistance change of the strain gages) proportional to the applied torque. Thus, according to an embodiment, the inventive torque sensor device comprises a first printed circuit board arranged over the intermediate portion and comprising a Wheatstone bridge circuitry electrically connected to the measurement transducers. The first printed circuit board may also comprise a DC or AC excitation source for the Wheatstone bridge circuitry.

Moreover, the torque sensor device may comprise a second printed circuit board arranged above the first printed circuit board and comprising a circuitry for signal conditioning, in particular, means for analogue-to-digital conversion and/or amplification of signals provided by the Wheatstone bridge circuitry of the first printed circuit board. The second printed circuit board may cover the first printed circuit board in order to protect it and the sensitive circuitry formed on the first printed circuit board and at the bottom of the second printed circuit board facing the first printed circuit board.

Furthermore, it is provided a robot, in particular, a collaborative robot, comprising a joint, wherein the joint comprises a gear box, and wherein the robot further comprises a torque sensor device according to one of the above-described embodiments. Particularly, the torque sensor device may be positioned to seal the gear box of the joint of the robot.

Additionally, it is provided a method of measuring a torque of a shaft positioned in a gear box, in particular, a gear box of a joint of a robot, the method comprising attaching the torque sensor device according to one of the above-described embodiments to the gear box such that the gear box is sealed and measuring the torque by means of that torque sensor device that is sealing the gear box.

Further features and exemplary embodiments as well as advantages of the present disclosure will be explained in detail with respect to the drawings. It is understood that the present disclosure should not be construed as being limited by the description of the following embodiments. It should furthermore be understood that some or all of the features described in the following may also be combined in alternative ways.
- Figures 1A and 1B: show torque sensor devices each comprising an inner flange, an outer flange and a solid intermediate portion continuously extending from the inner flange to the outer flange in a radial direction in accordance with embodiments of the present invention.
- Figure 2: illustrates the torque sensor device of Figs. 1A or 1B and comprising a first printed circuit board.
- Figure 3: illustrates the torque sensor device of Fig. 2 and comprising a second printed circuit board.
- Figures 4A to 4D: illustrate torque measurement with compensation for tilt, axial load and radial load.
- Figure 5: shows a torques sensor device comprising tapered out regions in the intermediate portion.

The present invention provides a torque sensor device that allows for accurately measuring the torque of an object, for example, a rotating shaft or a robot joint wherein the measurement is not significantly affected by axial or radial loads or tilting moments. In particular, the torque sensor device can be used for sealing purposes, for example, for sealing a gear box. The torque sensor device is suitable for measuring the torque of a joint of a (collaborative) robot, for example. Torque control based on measurements made by the torque sensor device can be advantageously implemented in robots to facilitate robot-human interactions, for example.

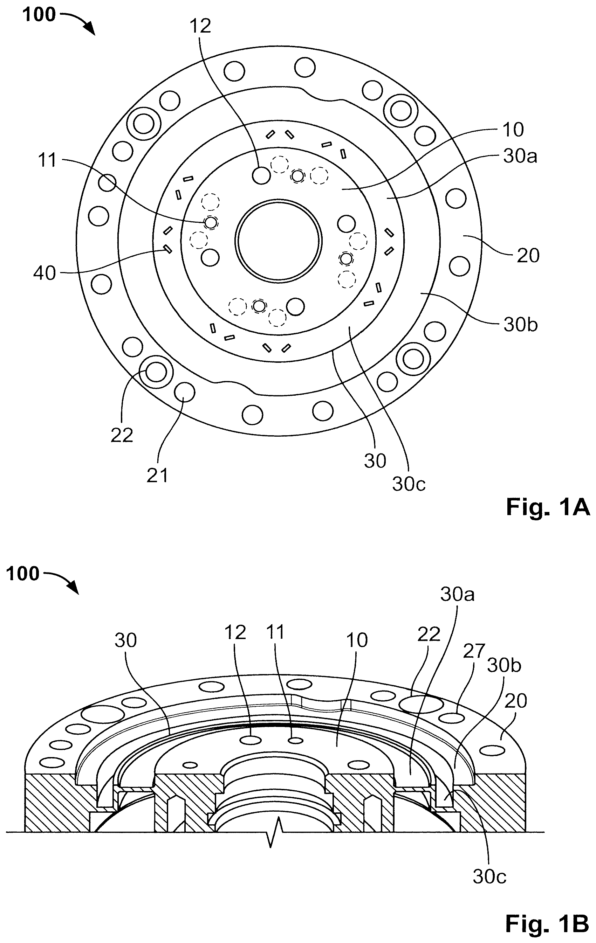

Exemplary embodiments of the inventive torque sensor device 100 are shown in Figures 1A and 1B. The torque sensor device 100 comprises an inner flange 10 and an outer flange 20. An intermediate portion 30 continuously extends radially from the inner flange 10 to the outer flange 20. The inner flange 10, the outer flange 20 and the intermediate portion 30 form a circular body, for example, a monolithic circular body. The circular body may consist of or comprise, for example, steel, aluminum or an aluminum alloy. Different parts of the circular body may be made of different materials when no monolithic circular body is provided. No openings extending through the entire material are formed in the intermediate portion 30. Thus, the intermediate portion 30 can serve as a seal, for example, for sealing a gear box.

The intermediate portion 30 comprises sub-portions 30a and 30b that are separated from each other by a circumferential groove 30c as illustrated in Figure 1B. Such a circumferential groove 30c serves as a radially elastic portion provided in order to suppress effects of radial loads (see also description below) in the process of measuring torque.

A plurality of pairwise measurement transducers 40 is formed on the intermediate portion 30, for example sub-portion 30a, as it is shown in the top view of the main surface of the torque sensor device 100 of Figure 1A. The measurement transducers 40 are arranged symmetrically about an axis running through the center of the circular body perpendicular to the main surface (axial axis). The measurement transducers 40 can, in principle, be strain-sensitive transducers, in particular, strain gages.

Moreover, in the inner flange 10 inner force application openings 11 and 12 of different sizes are formed and in the outer flange 20 outer force application openings 21 and 22 of different sizes are formed. The inner and outer force application openings 11, 12, 21 and 22 may be bores extending in an axial direction. The bores are open at least one side or the respective flange and may have any suitable geometrical shape, for example, a circular or polygonal shape cross-section.

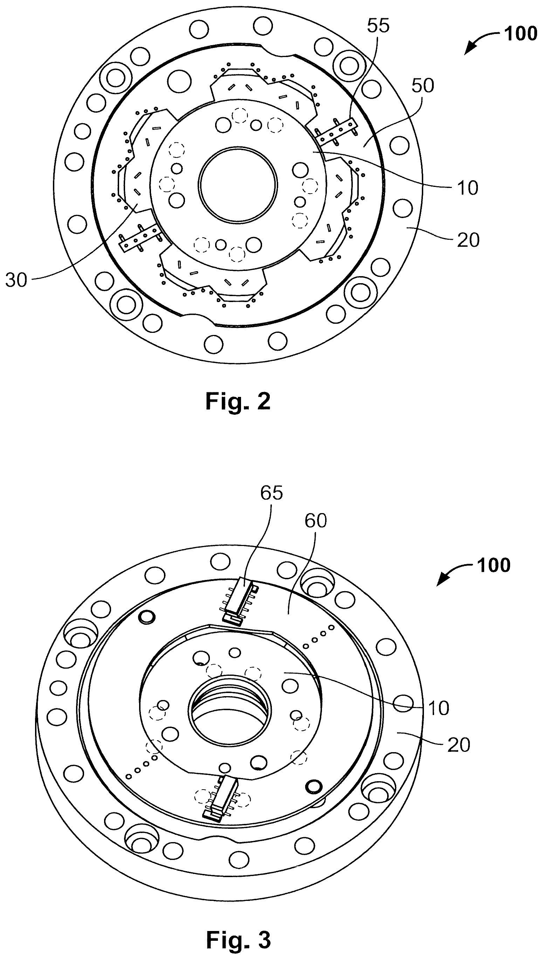

Figure 2 shows the torque sensor of Figure 1A or 1B wherein a first printed circuit board 50 comprising some circuitry devices as, for example, resistors and capacitors, and a connector 55 for connection to another printed circuit board 60 (see below) is provided over the intermediate portion 30. The measurement transducers 40 may be connected with an included measurement portion to the intermediate portion 30 and they may have free connecting portions for connection to the first printed circuit board 50 and, thus, the circuitry devices of the first printed circuit board 50. Particularly, the first printed circuit board 50 may comprise Wheatstone bridge elements (resistors) for converting an applied torque to voltage output signals as it is known in the art. Depending on actual applications half or full Wheatstone bridge may be used.

The first printed circuit board 50 may be covered by a second printed circuit board 60 as it is illustrated in Figure 3. The second printed circuit board 60 protects the measurement transducers 40 and circuitry devices 55 against the environment. Particularly, the second printed circuit board 60 may have sensitive circuitry devices at the bottom (facing the first printed circuit boards 50) and a connector 65 for connection to the first printed circuit board. The second printed circuit board 60 is configured for signal conditioning, for example, for analogue-to-digital conversion of voltage output signals supplied by the circuitry devices of the first printed circuit board 50. Signal conditioning may also include amplification of voltage output signals supplied by the circuitry devices of the first printed circuit board 50.

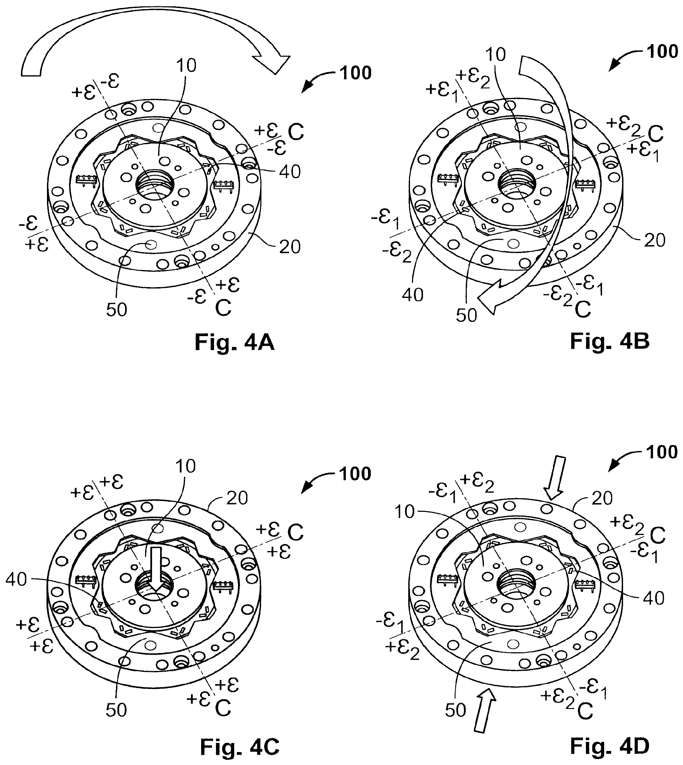

As already mentioned measurement transducers 40 can be arranged about an axial axis running through the center of the circular body in a direction perpendicular to the main surface of the circular body. For example, one or two pairs of measurement transducers 40 may be arranged spaced apart from one or two neighboring pairs of measurement transducers 40 by 90° in a circumferential direction. Figures 4A to 4D illustrate an embodiment wherein strain gages 40 are arranged pairwise symmetrically about an axial axis running through the center of the circular body in a direction perpendicular to the main surface of the circular body and wherein two measuring channels C are defined by opposing pairs of strain gages 40 that are spaced apart from each other by 90° (from one channel to the other channel) in a circumferential direction. Each measuring channel C runs through the center of particular pairs of strain gages 40 that are arranged opposite to each other.

A torque (indicated by the arrow in Figure 4A) can be measured based on a differential strain +ε and -ε where +ε is experienced by one strain gage of a pair of strain gages 40 and -ε is experienced by the other strain gage of the pair of strain gages 40. The strain gages 40 are connected to a Wheatstone bridge circuitry formed on a printed circuit board 50. Due to the selected geometry of the arrangement of the strain gages 40 (and the corresponding architecture of the Wheatstone bridge circuitry) the voltage output signal supplied by the Wheatstone bridge circuitry caused by an applied torque (strain in the intermediate portion of the torque sensor device on which the strain gages 40 are provided for sensing the strain) is proportional to Σ_{ε} = 4 ε + 4 ε = 8 ε, i.e., a sufficiently high wanted voltage output signal can be provided.

On the other hand, perturbations due to tilt and axial and radial loads can be largely suppressed as illustrated in Figures 4B to 4D. The arrow in Figure 4B indicates a tilt that might be applied to the torque sensor device. The tilt applied to the torque sensor device 100 results in differential strains +ε₁ and +ε₂, +ε₂ and +ε₁, -ε₂ and -ε₁, and -ε₁ and -ε₂, respectively, for the four pairs of strain gages 40 defining the measuring channels C. Accordingly, the strain caused by the tilt is compensated by the chosen geometry of the arrangement of the strain gages 40 (and the corresponding architecture of the Wheatstone bridge circuitry): Σ_{ε} = ε₁ - ε₁ + ε₂ - ε₂ = 0 such that it does not contribute to a voltage output signal being proportional to the applied torque a shown in Figure 4A.

In order to achieve an accurate torque measurement it is also necessary to compensate for any axial loads. Such kind of compensation can also be achieved by the selected geometry of the arrangement of the strain gages 40 (and the corresponding architecture of the Wheatstone bridge circuitry) as it is illustrated in Figure 4C (the arrow indicates the applied axial load). The axial load (due to the axially symmetrically arrangement of the strain gages 40) results in strains +ε at each of the strain gages 40 and, therefore, in a zero net effect: Σ_{ε} = 4 ε - 4 ε. With respect to compensating for tilt and axial loads it might be advantageous to locate the strain gages 40 at the same radial distance to the inner flange 10 and to the outer flange 20.

Compensation for radial loads by the selected geometry of the arrangement of the strain gages 40 (and the corresponding architecture of the Wheatstone bridge circuitry) is illustrated in Figure 4D. The applied radial load is indicated by the arrows. The radial load results in differential strains -ε₁ and +ε₂, +ε₂ and -ε₁, -ε₁ and +ε₂, and +ε₂ and -ε₁, respectively, for the four pairs of strain gages 40 defining the two measuring channels C. Accordingly, the contribution to the voltage output signal of the Wheatstone bridge circuitry of the printed circuit board 50 is proportional to Σ_{ε} = -2 ε₁ + 2 ε₂ + 2 ε₁ - 2 ε₂ = 0.

However, it has to be noted that exact compensation for radial loads as illustrated in Figure 4D might not be achieved, if some radial loads are applied in a radial direction shifted with respect to the measuring channels C in the circumferential direction by 22.5°. In this case, some Σ_{ε} ≠ 0 may occur and negatively affect the accuracy of the measurement of the torque. In order to alleviate this problem some radially elastic portion realized by some groove 30c as illustrated in Figure 1B is provided in the intermediate portion 30 of the torque sensor device 100. The radially elastic portion may be machined on the top or the bottom of the intermediate portion 30.

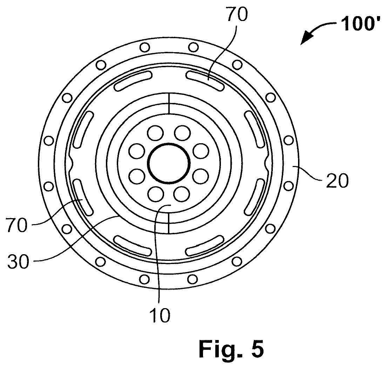

According to another approach the problem of non-compensation of radial loads that are applied in a radial direction shifted with respect to the measuring channels C in the circumferential direction by 22.5° tapered out portions 70 can be formed in the intermediate portion 30 of the torque sensor device 100' as it is illustrated in Figure 5. The tapered out portions 70 may be machined on the top or the bottom of the intermediate portion 30. In the example shown in Figure 5 not being part of the invention the tapered out portions 70 are arranged closer to the outer flange 20 than the inner flange 10 at the 22.5° positions. The tapered out portions 70 have larger dimensions in the circumferential direction than the radial direction.

Experiments have proven that such an arrangement of the tapered out portions 70 significantly reduces any contributions of the corresponding radial loads to Σ_{ε} and, thus, the measurement result. It has to be noted that the tapered out portions 70 have not to be punched through the intermediate portion 30 in order not to drop the advantageous sealing property of the torque sensor device 100'.

In accordance with the above-describe embodiments an accurately operating torque sensor device can be provided in a compact design with a reduced height as compared to the art and at low costs. It can seal a gear box without the need for any additional sealing means and provide at least a two channel measurement. Particularly, all of the measurement transducers involved can be formed on one and the same surface of the intermediate portion 30 of the torque sensor device 100, 100' described above.

### List of reference numbers:

- 10: inner flange
- 11, 12: inner force application openings
- 21, 22: outer force application openings
- 20: outer flange
- 30: intermediate portion
- 30a, 30b: sub-portions
- 30c: separator
- 40: measurement transducers
- 50: first printed circuit board
- 55: connector of the first printed circuit board
- 60: second printed circuit board
- 65: connector of the second printed circuit board
- 70: tapered out portions
- 100, 100': torque sensor device

## Claims

1. Torque sensor device (100, 100'), comprising
a circular body comprising an annular inner flange (10) and an annular outer flange (20) and a circular intermediate portion (30) located between the annular inner flange (10) and the annular outer flange (20), wherein the annular inner flange (10) is completely located closer to the center of the circular body than the annular outer flange (20) and comprises inner force application openings (11, 12) formed therein exclusively closer to the center of the circular body than the circular intermediate portion (30), the annular outer flange (20) comprises outer force application openings (21, 22) formed therein, and the circular intermediate portion (30) comprises an inner sub-portion (30a), an outer sub-portion (30b) and a circumferential groove (30c) for suppressing effects of radial loads and separating the inner sub-portion (30a) and the outer sub-portion (30b) from each other; and
a plurality of measurement transducers (40) formed in and/or on the inner sub-portion (30a) of the circular intermediate portion (30), in particular, in a pairwise manner; and
wherein the circular intermediate portion (30) is a continuously solid portion.

2. The torque sensor device (100, 100') according to claim 1, wherein the measurement transducers (40) are positioned axially symmetrically to an axis extending through the center of the circular body in a direction perpendicular to a main surface of the circular body.

3. The torque sensor device (100, 100') according to claim 2, wherein the measurement transducers (40) comprise at least four pairs of measurement transducers (40) and wherein the two measurement transducers (40) of each of the pairs of measurement transducers (40) are located symmetrically to an axis extending through the center of the circular body in a direction parallel to the main surface of the circular body.

4. The torque sensor device (100, 100') according to claim 3, wherein four pairs of measurement transducers (40) are provided and for each of the four pairs of measurement transducers (40) it holds that an axis extending through the center of the circular body in a direction parallel to the main surface of the circular body to which the two measurement transducers (40) of that pair of measurement transducers (40) are located symmetrically is spaced apart by 90° in a circumferential direction from an axis extending through the center of the circular body in a direction parallel to the main surface of the circular body to which two measurement transducers (40) of a neighboring pair of measurement transducers (40) are located symmetrically.

5. The torque sensor device (100, 100') according to one of the preceding claims, wherein the circular intermediate portion (30) comprises tapered out portions (70) not extending completely through the intermediate portion (30) in a direction along an axis extending through the center of the circular body in a direction perpendicular to the main surface of the circular body, wherein the tapered out portions (70), in particular, are located closer the outer flange (20) than the inner flange (10) and have a longer extension in a circular direction than in a radial direction.

6. The torque sensor device (100, 100') according to claim 5, wherein the center of each of the tapered out portions (70) in a circumferential direction is spaced apart from an axis extending through the center of the circular body in a direction parallel to the main surface of the circular body with respect to which two measurement transducers (40) of a pair of measurement transducers (40) are located symmetrically by 22.5° in a circumferential direction.

7. The torque sensor device (100, 100') according to one of the preceding claims, further comprising a first printed circuit board (50) arranged over the intermediate portion (30) and comprising a Wheatstone bridge circuitry electrically connected to the measurement transducers (40).

8. The torque sensor device (100, 100') according to claim 7, further comprising a second printed circuit board (60) arranged above the first printed circuit board (50) and comprising a circuitry for signal conditioning, in particular, means for analogue-to-digital conversion and/or amplification of signals provided by the Wheatstone bridge circuitry of the first printed circuit board.

9. The torque sensor device (100, 100') according to one of the preceding claims, wherein the measurement transducers (40) comprise or consist of at least one of silicon gages, foil strain gages, and thin layer strain gages.

10. Robot, in particular, a collaborative robot, comprising a joint, wherein the joint comprises a gear box, and further comprising a torque sensor device (100, 100') according to one of the preceding claims.

11. The robot according to claim 10, wherein the torque sensor device (100, 100') is positioned to seal the gear box.

12. Method of measuring a torque of a shaft positioned in a gear box, in particular, a gear box of a joint of a robot, the method comprising attaching the torque sensor device (100, 100') according to one of the claims 1 to 9 to the gear box such that the gear box is sealed and measuring the torque by means of the torque sensor device (100, 100') sealing the gear box.

## Patentansprüche

1. Drehmomentsensorvorrichtung (100, 100'), umfassend
einen kreisförmigen Körper, der einen ringförmigen inneren Flansch (10) und einen ringförmigen äußeren Flansch (20) und einen kreisförmigen Zwischenabschnitt (30), der zwischen dem ringförmigen inneren Flansch (10) und dem ringförmigen äußeren Flansch (20) angeordnet ist, umfasst, wobei der ringförmige innere Flansch (10) vollständig näher an der Mitte des kreisförmigen Körpers angeordnet ist als der ringförmige äußere Flansch (20) und innere Kraftaufbringungsöffnungen (11, 12) umfasst, die darin ausschließlich näher an der Mitte des kreisförmigen Körpers als der kreisförmige Zwischenabschnitt (30) ausgebildet sind, der ringförmige äußere Flansch (20) äußere Kraftaufbringungsöffnungen (21, 22) umfasst, die darin ausgebildet sind, und der kreisförmige Zwischenabschnitt (30) einen inneren Unterabschnitt (30a), einen äußeren Unterabschnitt (30b) und eine Umfangsnut (30c) zum Unterdrücken von Effekten radialer Lasten und zum Trennen des inneren Unterabschnitts (30a) von dem äußeren Unterabschnitt (30b) umfasst; und
eine Vielzahl von Messwandlern (40), die, insbesondere paarweise, in und/oder auf dem inneren Teilabschnitt (30a) des kreisförmigen Zwischenabschnitts (30) ausgebildet sind; und
wobei der kreisförmige Zwischenabschnitt (30) ein durchgehend massiver Abschnitt ist.

2. Die Drehmomentsensorvorrichtung (100, 100') gemäß Anspruch 1, wobei die Messwandler (40) axialsymmetrisch zu einer Achse angeordnet sind, die sich durch die Mitte des kreisförmigen Körpers in einer Richtung senkrecht zu einer Hauptoberfläche des kreisförmigen Körpers erstreckt.

3. Die Drehmomentsensorvorrichtung (100, 100') gemäß Anspruch 2, wobei die Messwandler (40) mindestens vier Paare von Messwandlern (40) umfassen, und wobei die zwei Messwandler (40) jedes der Paare von Messwandlern (40) symmetrisch zu einer Achse angeordnet sind, die sich durch die Mitte des kreisförmigen Körpers in einer Richtung parallel zu der Hauptoberfläche des kreisförmigen Körpers erstreckt.

4. Die Drehmomentsensorvorrichtung (100, 100') gemäß Anspruch 3, wobei vier Paare von Messwandlern (40) vorgesehen sind und für jedes der vier Paare von Messwandlern (40) gilt, dass eine Achse, die sich durch die Mitte des kreisförmigen Körpers in einer Richtung parallel zu der Hauptfläche des kreisförmigen Körpers erstreckt, zu der die beiden Messwandler (40) dieses Paares von Messwandlern (40) symmetrisch angeordnet sind, in Umfangsrichtung um 90° von einer Achse beabstandet ist, die sich durch die Mitte des kreisförmigen Körpers in einer Richtung parallel zur Hauptfläche des kreisförmigen Körpers erstreckt, zu der zwei Messwandler (40) eines benachbarten Paars von Messwandlern (40) symmetrisch angeordnet sind.

5. Die Drehmomentsensorvorrichtung (100, 100') gemäß einem der vorhergehenden Ansprüche, wobei der kreisförmige Zwischenabschnitt (30) ausgedünnte Abschnitte (70) umfasst, die sich nicht vollständig durch den Zwischenabschnitt (30) in einer Richtung entlang einer Achse erstrecken, die sich durch die Mitte des kreisförmigen Körpers in einer Richtung senkrecht zu der Hauptoberfläche des kreisförmigen Körpers erstreckt, wobei die ausgedünnten Abschnitte (70) insbesondere näher an dem äußeren Flansch (20) als an dem inneren Flansch (10) angeordnet sind und eine längere Ausdehnung in einer kreisförmigen Richtung als in einer radialen Richtung aufweisen.

6. Die Drehmomentsensorvorrichtung (100, 100') gemäß Anspruch 5, wobei die Mitte jedes der ausgedünnten Abschnitte (70) in einer Umfangsrichtung von einer Achse, die sich durch die Mitte des kreisförmigen Körpers in einer Richtung parallel zu der Hauptoberfläche des kreisförmigen Körpers erstreckt, in Bezug auf die zwei Messwandler (40) eines Paars von Messwandlern (40) symmetrisch angeordnet sind, um 22,5° in Umfangsrichtung symmetrisch beabstandet ist.

7. Die Drehmomentsensorvorrichtung (100, 100') gemäß einem der vorhergehenden Ansprüche, die ferner eine erste Leiterplatine (50) umfasst, die über dem Zwischenabschnitt (30) angeordnet ist und eine Wheatstone-Brückenschaltung umfasst, die elektrisch mit den Messwandlern (40) verbunden ist.

8. Die Drehmomentsensorvorrichtung (100, 100') gemäß Anspruch 7, die ferner eine zweite Leiterplatine (60) umfasst, die über der ersten Leiterplatte (50) angeordnet ist und eine Schaltung zur Signalaufbereitung, insbesondere Mittel zur Analog-Digital-Wandlung und/oder Verstärkung von Signalen, die von der Wheatstone-Brückenschaltung der ersten Leiterplatine bereitgestellt werden, umfasst.

9. Die Drehmomentsensorvorrichtung (100, 100') gemäß einem der vorhergehenden Ansprüche, wobei die Messwandler (40) mindestens eines von Siliziummessstreifen, Folien-Dehnungsmessstreifen und Dünnschicht-Dehnungsmessstreifen umfassen oder daraus bestehen.

10. Roboter, insbesondere ein kollaborativer Roboter, mit einem Gelenk, wobei das Gelenk ein Getriebegehäuse umfasst, und weiterhin mit einer Drehmomentsensorvorrichtung (100, 100') gemäß einem der vorhergehenden Ansprüche.

11. Der Roboter gemäß Anspruch 10, wobei die Drehmomentsensorvorrichtung (100, 100') so angeordnet ist, dass sie das Getriebegehäuse abdichtet.

12. Verfahren zum Messen eines Drehmoments einer in einem Getriebegehäuse, insbesondere einem Getriebegehäuse eines Gelenks eines Roboters, angeordneten Welle, wobei das Verfahren das Anbringen der Drehmomentsensorvorrichtung (100, 100') gemäß einem der Ansprüche 1 bis 9 an dem Getriebegehäuse, sodass das Getriebegehäuse abgedichtet wird, und das Messen des Drehmoments mittels der das Getriebegehäuse abdichtenden Drehmomentsensorvorrichtung (100, 100') umfasst.

## Revendications

1. Capteur de couple (100, 100'), comprenant
un corps circulaire comprenant une bride intérieure annulaire (10) et une bride extérieure annulaire (20) et une partie intermédiaire circulaire (30) située entre la bride intérieure annulaire (10) et la bride extérieure annulaire (20), dans lequel la bride intérieure annulaire (10) est entièrement située plus près du centre du corps circulaire que la bride extérieure annulaire (20) et comprend des ouvertures d'application de la force intérieure (11, 12) formées exclusivement plus près du centre du corps circulaire que la partie intermédiaire circulaire (30), la bride extérieure annulaire (20) comprend des ouvertures d'application de force extérieures (21, 22) formées à l'intérieur, et la partie intermédiaire circulaire (30) comprend une sous-portion intérieure (30a), une sous-portion extérieure (30b) et une rainure circonférentielle (30c) pour supprimer les effets des charges radiales et séparer la sous-portion intérieure (30a) et la sous-portion extérieure (30b) l'une de l'autre ; et
une pluralité de transducteurs de mesure (40) formés dans et/ou sur la sous-partie intérieure (30a) de la partie intermédiaire circulaire (30), en particulier, dans le sens de la paire ; et
dans lequel la partie intermédiaire circulaire (30) est une partie solide continue.

2. Capteur de couple (100, 100') selon la revendication 1, dans lequel les transducteurs de mesure (40) sont positionnés axialement de manière symétrique par rapport à un axe traversant le centre du corps circulaire dans une direction perpendiculaire à la surface principale du corps circulaire.

3. Capteur de couple (100, 100') selon la revendication 2, dans lequel les transducteurs de mesure (40) comprennent au moins quatre paires de transducteurs de mesure (40) et dans lequel les deux transducteurs de mesure (40) de chacune des paires de transducteurs de mesure (40) sont situés symétriquement par rapport à un axe traversant le centre du corps circulaire dans une direction parallèle à la surface principale du corps circulaire.

4. Capteur de couple (100, 100') selon la revendication 3, dans lequel quatre paires de transducteurs de mesure (40) sont fournies et pour chacune des quatre paires de transducteurs de mesure (40), un axe traversant le centre du corps circulaire dans une direction parallèle à la surface principale du corps circulaire sur lequel les deux transducteurs de mesure (40) de cette paire de transducteurs de mesure (40) sont situés de manière symétrique, lequel axe est espacé de 90° dans une direction circonférentielle à partir d'un axe traversant le centre du corps circulaire dans une direction parallèle à la surface principale du corps circulaire auquel deux transducteurs de mesure (40) d'une paire voisine de transducteurs de mesure (40) sont situés de manière symétrique.

5. Capteur de couple (100, 100') selon l'une des revendications précédentes, dans lequel la partie intermédiaire circulaire (30) comprend des parties effilées (70) qui ne s'étendent pas complètement à travers la partie intermédiaire (30) dans une direction le long d'un axe s'étendant à travers le centre du corps circulaire dans une direction perpendiculaire à la surface principale du corps circulaire, dans lequel les parties effilées (70), en particulier, sont situées plus près du rebord extérieur (20) que du rebord intérieur (10) et ont une extension plus longue dans une direction circulaire que dans une direction radiale.

6. Capteur de couple (100, 100') selon la revendication 5, dans lequel le centre de chacune des parties effilées (70) dans une direction circonférentielle est espacé d'un axe s'étendant à travers le centre du corps circulaire dans une direction parallèle à la surface principale du corps circulaire par rapport à laquelle deux transducteurs de mesure (40) d'une paire de transducteurs de mesure (40) sont situés symétriquement de 22,5° dans une direction circonférentielle.

7. Capteur de couple (100, 100') selon l'une des revendications précédentes, comprenant en outre une première carte de circuit imprimé (50) disposée sur la partie intermédiaire (30) et comprenant un circuit en pont de Wheatstone connecté électriquement aux transducteurs de mesure (40).

8. Capteur de couple (100, 100') selon la revendication 7, comprenant en outre une deuxième carte de circuit imprimé (60) disposée au-dessus de la première carte de circuit imprimé (50) et comprenant un circuit pour le conditionnement des signaux, en particulier des moyens pour la conversion analogique-numérique et/ou l'amplification des signaux fournis par le circuit du pont de Wheatstone de la première carte de circuit imprimé.

9. Capteur de couple (100, 100') selon l'une des revendications précédentes, dans lequel les transducteurs de mesure (40) comprennent ou sont constitués d'au moins une des jauges de silicium, des jauges de contrainte à feuille et des jauges de contrainte à couche mince.

10. Robot, en particulier robot collaboratif, comprenant une articulation, dans lequel l'articulation comprend une boîte de vitesses, et comprenant en outre un dispositif capteur de couple (100, 100') selon l'une des revendications précédentes.

11. Robot selon la revendication 10, dans lequel le capteur de couple (100, 100') est positionné de manière à sceller la boîte de vitesses.

12. Procédé de mesure d'un couple d'un arbre positionné dans un réducteur, notamment le réducteur d'une articulation d'un robot, le procédé comprenant la fixation du dispositif capteur de couple (100, 100') selon l'une des revendications 1 à 9 au réducteur de manière à ce que le réducteur soit étanche et mesure le couple au moyen du dispositif capteur de couple (100, 100') assurant l'étanchéité du réducteur.
